# EUROPEAN PATENT SPECIFICATION

(11) **EP 3 501 339 B1**
(45) Date of publication and mention of the grant of the patent: **09.11.2022**
(21) Application number: 19157807.9
(22) Date of filing: 17.12.2014
(51) Int. Cl.: A47B 47/00, F16B 12/10, F16B 12/46, A47B 47/04, A47B 88/90

(54) **AN ASSEMBLED PRODUCT AND A METHOD OF ASSEMBLING THE PRODUCT**
ZUSAMMENGESETZTES PRODUKT UND VERFAHREN ZUM ZUSAMMENSETZEN DES PRODUKTS
PRODUIT ASSEMBLÉ ET PROCÉDÉ D'ASSEMBLAGE DU PRODUIT

(30) Priority: 10.01.2014 SE 1450022; 10.01.2014 SE 1450018; 15.01.2014 SE 1450034; 17.01.2014 SE 1450047; 17.01.2014 US 201414158165
(43) Date of publication of application: 26.06.2019
(62) Divisional of application: 14878329.3
(73) Proprietor: Välinge Innovation AB, 263 64 Viken (SE)
(72) Inventor: DERELÖV, Peter, 252 84 Helsingborg (SE); BRÄNNSTRÖM, Hans, 263 36 Höganäs (SE); PÅLSSON, Agne, deceased (SE)
(74) Representative: Välinge Innovation AB

(56) References cited:
- WO-A1-2012/095454
- WO-A2-2010/070605
- FR-A1- 2 517 187
- US-A1- 2008 010 937

## Description

### Field of the invention

The present invention relates to a set of panels for an assembled product, such as a box or a drawer, a furniture component or a furniture. The assembled product is provided with a locking device comprising a flexible tongue.

### Technical background

A furniture provided with a mechanical locking system is known in, e.g., WO 2012/154113 (A1). The furniture comprises a first panel connected perpendicular to a second panel by a mechanical locking system comprising a flexible tongue in an insertion groove. Documents FR2517187A1, WO2012/095454A1, US2008/010937A1 and WO2010/070605A2 are relevant prior art documents.

### Summary of the invention

It is an object of certain embodiments of the present invention to provide an improvement over the above described techniques and known art.

A further object of embodiments of the invention is to provide a set of panels for an assembled product, such as a so-called flat-pack furniture product, that are configured to be assembled without tools.

The invention is defined in the appended claims.

At least some of these and other objects and advantages that will be apparent from the description have been achieved by a first aspect of the disclosure that comprises a set of panels for an assembled product. The set of panels are provided with locking devices. Each locking device comprises a flexible tongue arranged in an insertion groove at an edge of a panel, said flexible tongue cooperates with a tongue groove, at an adjacent edge of an adjacent panel, for locking the panel and the adjacent panel together. The locking device is configured such that the edge and the adjacent edge may be connected by hand. The set of panels comprises at least four frame panels that are configured to be connected together at adjacent edges by at least one of said locking devices to obtain a frame, preferably of a rectangular shape. Additionally, the set of panels comprises a fifth panel, such as a back or bottom panel, which is configured to be connected to a back or bottom edge of the frame by at least one of said locking devices.

The fifth panel is configured be connected to a back or a bottom edge of two or more of the frame panels, by at least one of said locking devices at each of said back or bottom edge of said two or more frame panels.

The locking devices comprise an edge section groove at the panel or at the adjacent panel. An edge section of the other of the panel or the adjacent panel cooperate with said edge groove for locking the panel and the adjacent panel together. The flexible tongue and the tongue groove cooperate for locking the panel and the adjacent panel together in a first direction and the edge section and the edge section groove cooperate for locking the panel and the adjacent panel together in a second direction, perpendicular to the first direction.

The edge section may be provided with a calibrating groove.

The panels may be of plastic or wood fibre. For example, the panels may be plastic panels or wood fibre based boards, e.g. HDF boards, particleboard or solid wood board. The panels may be provided with a decorative layer.

The assembled product may be a furniture component or a furniture, such as a drawer, a cupboard, bookshelves, a wardrobe, a kitchen fixture, or a box for storing or transporting.

The insertion groove, of at least one of said locking devices, may extend along essentially the entire length of the edge of the panel (e.g., at least 80% of the length of the panel).

The tongue groove, of at least one of said locking devices, may extend along essentially the entire length of the adjacent edge of the adjacent panel (e.g., at least 80% of the length of the adjacent panel).

A tongue groove and an insertion groove that extend along essentially the entire width of the panel and the adjacent panel (e.g., at least 80% of the width of the adjacent panel), respectively, may facilitate the production of the tongue groove and the insertion groove. The tongue groove and the insertion groove may be produced by displacing the panel and the adjacent panel, respectively, pass a mechanical cutting tool, such as a fixed milling head.

Any of the panels may be provide with a dismantling groove at any of the locking devices, said dismantling groove or recess is preferably adapted for insertion of a dismantling tool. The dismantling tool may be inserted into the dismantling groove or recess to un-lock the locking device.

A further example not according to the claimed invention, is a method of assembling a set of panels to obtain an assembled product, the method comprising:
- arranging a first panel, with a first main plane, perpendicular to a second panel with a second main plane, wherein the first main plane is perpendicular to the second main plane,
- connecting by hand a first edge of the first panel to a first edge of the second panel, by linearly displacing the first panel and/or the second panel;
- arranging a third panel, with a third main plane, perpendicular to the first and the second panel, wherein the third main plane is perpendicular to the first and the second main plane; and
- connecting by hand a second edge of the third panel to a second edge of the second panel, by linearly displacing the third panel and/or second panel.

The method, not according to the invention, may further comprise the step of connecting by hand a first edge of the third panel to a second edge of the first panel, by linearly displacing the third panel and/or the first panel.

The method, not according to the invention, may further comprise the steps of arranging a fourth panel, with a fourth main plane, perpendicular to the first and the third panel, wherein the fourth main plane is parallel to the second main plane, and connecting by hand a first edge of a fourth panel to a third edge of the first panel, by linearly displacing the fourth panel and/or the first panel.

The method, not according to the invention, may further comprise the step of connecting by hand a third edge of the third panel to a second edge of the fourth panel, by linearly displacing the third panel and/or the fourth panel.

The method, not according to the invention, may further comprise the steps of arranging a fifth panel, with a fifth main plane, perpendicular to the third and the fourth panel, wherein the fifth main plane is parallel to the first main plane, and connecting by hand a first edge of the fifth panel to a third edge of the second panel, and a third edge of a fifth panel to a third edge of the fourth panel, by linearly displacing the fifth panel and/or the second and the fourth panel.

The set of panels comprises at least five panels, wherein each connecting step comprises linearly displacing of one of the five panels.

The set of panels under the second aspect may comprise embodiments of the locking device described for use with the first aspect.

Each linear displacement may be executed in a direction parallel to the third main plane.

Each connecting step may comprise a displacement of a part of a flexible tongue of a locking device, wherein a part of the flexible tongue is displaced into a tongue groove for locking an edge to an adjacent edge.

Each connecting step may comprise connecting two panels such that the panels are mechanically locked together in directions perpendicular to the main plane of each of the two connected panels.

The panels may be of plastic or wood fibre. For example, the panels may be wood fibre based boards, e.g. HDF boards, particleboard or solid wood board, or plastic panels. The panels may be provided with a decorative layer.

The assembled product may be a furniture component or a furniture, such as a drawer, a cupboard, bookshelves, a wardrobe, a kitchen fixture, or a box for storing or transporting.

Said linear displacement during connection of any edge of any of the first, the second, the third, the fourth or the fifth panel, may alternatively be an essential linear displacement.

The method may be used for assembling of the set of panels of the first aspect.

A third aspect of the disclosure is an assembled product comprising at least three panels arranged in three different planes, a first panel is connected essentially perpendicular to a second panel, and a third panel is connected essentially perpendicular to the second panel. The assembled product comprises one or more locking devices, each comprising a flexible tongue arranged in an insertion groove at a panel, said flexible tongue cooperates with a tongue groove, at an adjacent panel, for locking the panel and the adjacent panel together. The second edge of the second panel is connected to a second edge of the third panel by a first of said locking devices.

The panels may be of plastic or wood fibre. For example, the panels may be wood fibre based boards, e.g. HDF boards, particleboard or solid wood board, or plastic panels. The panels may be provided with a decorative layer.

The assembled product may be a furniture component or a furniture, such as a drawer, a cupboard, bookshelves, a wardrobe, a kitchen fixture, or a box for storing or transporting.

The three planes are preferably essentially perpendicular planes.

A first edge of the third panel may be connected to a first edge of the first panel by a second of said locking devices. The first panel and the second panel may be a first and a second board, respectively, of a frame, and the third panel may be the back piece, of a bookshelves or a wardrobe. The third panel, such as a back piece, connected by the first and the second of said locking devices, may increase the strength of the assembled product. The angle between first and the second panel may be guided by the angle between the first and the second edge of the third panel. A bookshelves or a wardrobe with perpendicular corners may be obtained easily by embodiments of the disclosure. The first edge of the third panel may be connected slideable along the first edge of the first panel in order to simplify assembling and disassembling.

A first edge of a sixth panel may be connected essentially perpendicular to the first panel, between the second and fourth panel. The sixth panel may be essentially parallel to the second and fourth panel. The first edge of the sixth panel may be connected by a seventh of said locking devices. The flexible tongue of the seventh of said locking devices is preferably arranged in an insertion groove at the first edge of the sixth panel. The sixth panel may be a fixed shelf of the assembled product, e.g. a bookshelves.

A fourth panel may be connected essentially perpendicular to the first panel, wherein a third edge of the third panel may be connected to a second edge of the fourth panel by a third of said locking devices.

The second and the fourth panel may be arranged essentially parallel and the third panel may be connected slideable to the second and the fourth panel in order to facilitate disassembling.

A fourth edge of the third panel may be arranged in a groove at a second edge of a fifth panel. The fifth panel may be connected essentially perpendicular to the second and fourth panel.

The assembled product may be a semi product for a drawer, without the fifth panel that may be a front panel, and the first, second and fourth panels may be boards of the frame and the third panel may be the bottom board. The front panel may be connected essentially perpendicular to the second and fourth panel in the same factory as the semi product, in another factory or carpentry or by a carpenter at a construction site.

A first edge of the fifth panel may be connected to a third edge of the second panel by a fourth of said locking devices, and a third edge of the fifth panel may be connected to a third edge of the fourth panel by a fifth of said locking devices.

A first edge of the first panel may be connected to a first edge of the second panel by a sixth of said locking devices.

A first edge of a fourth panel may be connected to a third edge of the first panels by a seventh of said locking devices.

The insertion groove, in at least one of said locking devices, may extend along essentially the entire length of the panel (e.g., at least 80% of the length of the panel).

The tongue groove, in at least one of said locking devices, may extend along essentially the entire length of the adjacent panel (e.g., at least 80% of the length of the adjacent panel).

A tongue groove and an insertion groove that extend along essentially the entire width of the panel and the adjacent panel (e.g., at least 80% of the width of the adjacent panel), respectively, may facilitate the production of the tongue groove and the insertion groove. The tongue groove and the insertion groove may be produced by displacing the panel and the adjacent panel, respectively, pass a fixed milling head.

The flexible tongue, in at least one of said locking devices, may be displaceable in the insertion groove during locking and un-locking of the locking device.

The locking devices may comprise an edge section groove at the panel or at the adjacent panel. An edge section of the other of the panel or the adjacent panel may cooperate with said edge groove for locking the panel and the adjacent panel together. The flexible tongue and the tongue groove cooperate for locking the panel and the adjacent panel together in a first direction and the edge section and the edge section groove cooperate for locking the panel and the adjacent panel together in a second direction, perpendicular to the first direction.

The edge section may be provided with a calibrating groove.

The third panel may be provided with a dismantling groove or recess at one or more of said locking devices, said dismantling groove or recess is preferably adapted for insertion of a dismantling tool. The dismantling tool may be inserted into the dismantling groove or recess to un-lock the locking device.

Any of the first, the second, the fourth or the fifth panel may be provided with a dismantling groove at any of the locking devices, said dismantling groove or recess is preferably adapted for insertion of a dismantling tool. The dismantling tool may be inserted into the dismantling groove or recess to un-lock the locking device.

The method of the second aspect may be used for assembling of the assembled product.

### Brief description of the drawings

The present invention will by way of example be described in more detail with reference to the appended schematic drawings, which shows embodiments of the present invention.
FIGS 1A-B show embodiments of a locking device not presently claimed for a furniture.
FIG. 2A shows a furniture product according to an embodiment of the invention.
FIGS. 2B-C show furniture components not presently claimed
FIG 3A shows a furniture product according to an embodiment of the invention.
FIGS. 3B show a furniture component not presently claimed
FIG 4A shows a method not presently claimed of assembling a furniture component or a furniture.
FIG 4B shows a corner section not presently claimed of a furniture component or a furniture.
FIG 5 shows a partly assembled furniture product according to an embodiment of the invention.
FIGS 6A-D show embodiments of a locking device not presently claimed for a furniture.
FIG 7A shows an embodiment of a locking device not presently claimed for a furniture.
FIGS 7B-C show embodiments of a locking device not presently claimed for a furniture and a disassembling tool not presently claimed.
FIGS 7D-E show embodiments of a locking device not presently claimed provided with a disassembling recess and a disassembling tool
FIG 8A-C show embodiments of a mechanical locking system not presently claimed for a back or a bottom panel.
FIG 9 shows a locking device not presently claimed for an assembled.
FIG 10A shows a locking device not presently claimed for locking a back or a bottom panel to a frame.
FIG 10B shows a locking device not presently claimed for locking a shelf to a frame.
FIG 11A-H show embodiments of flexible tongues not presently claimed.

### Detailed description

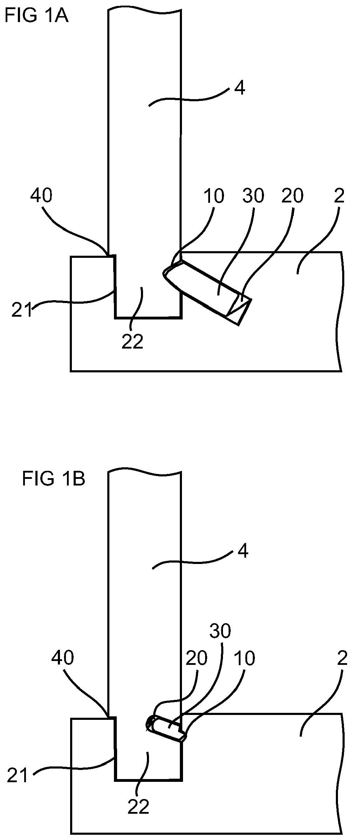

An example of a locking device for locking a panel 4 to an adjacent panel 2 is shown in FIGS 1A-B. The panel and the adjacent panel may be panels of a furniture that are connected perpendicular to each other, i.e. with a main surface of the panel perpendicular to a main surface of the adjacent panel. An edge section 22 of the panel 4 is arranged in an edge section groove 21 of the adjacent panel 2 for locking the panel and the adjacent panel together in a first direction. The example in FIG 1A comprises a flexible tongue 30 arranged in an insertion groove 20 in the edge section groove 21 and a tongue groove 10 at the edge section 22. The example in FIG 1B comprises a flexible tongue 30 arranged in an insertion groove 20 at the edge section 22 and a tongue groove in the edge section groove. The flexible tongue 30 and the tongue groove 10 cooperate for locking the panel and the adjacent panel together in a second direction, which is essentially perpendicular to the first direction. The flexible tongue is during assembling, of the panel and the adjacent panel, pushed into the insertion groove when the edge section is inserted into the edge section groove. The flexible tongue springs back and into the tongue groove when the panel and the adjacent panel have reached a connected state.

The panel may be a back piece of a bookshelves or a wardrobe and the adjacent panel may be a board of the frame. The panel may also be a bottom panel of a drawer and the adjacent panel a board of the frame. Furthermore, the panel and the adjacent panel may be a first and a second board respectively of a frame of a bookshelves, a wardrobe or a drawer. The back piece and the bottom may be an HDF board or a particleboard with a thickness of about 2-4 mm.

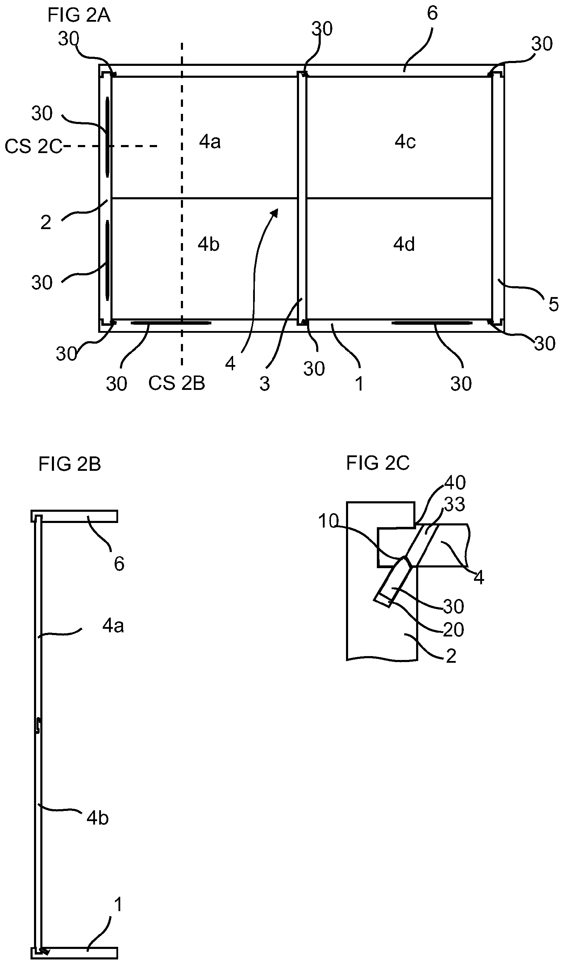

FIG 2A shows a furniture, such as a bookshelves, comprising eight of the locking devices, arranged with a side of the frame facing downwards. The furniture comprises a first panel 1, e.g. a side of the bookshelves, connected at a first edge to a first edge of a second panel 2, e.g. the top of the bookshelves, by one of the locking devices. A first edge of a third panel 4, e.g. a rectangular back piece of the bookshelves, is connected to a second edge of the second panel by another of the locking devices. A second edge of the third panel 4 is connected to second edge of the first panel by another of said locking devices. A first edge of a fourth panel 5, e.g. a bottom of the bookshelves, is connected to a third edge of the first panel by another of said locking devices. An edge section of a third edge of the third panel 4 may be arranged in an edge section groove at a second edge of the fourth panel 5. A first edge of a fifth panel 6, e.g. a side of the bookshelves, is connected to a third edge of the fourth panel 5, by another of said locking devices, and a third edge of the fifth panel is connected to a third edge of the second panel, by another of said locking devices. An edge section of a fourth edge of the third panel 4 may be arranged in an edge section groove at a second edge of the fifth panel 5. The locking device at the first and the second edge respectively of the third panel may each comprise two or more flexible tongues 30. A sixth panel 3, e.g. a shelf of the bookshelves, which is arranged parallel to the first and the fourth panel, is connected, by another of the locking devices, at a first edge to the first to the first panel, and a third edge is connected, by another of the locking devices, to the fifth panel. The flexible tongue of the locking device at the first and third edge, respectively, of the sixth panel is preferably arranged at the edge section 22.

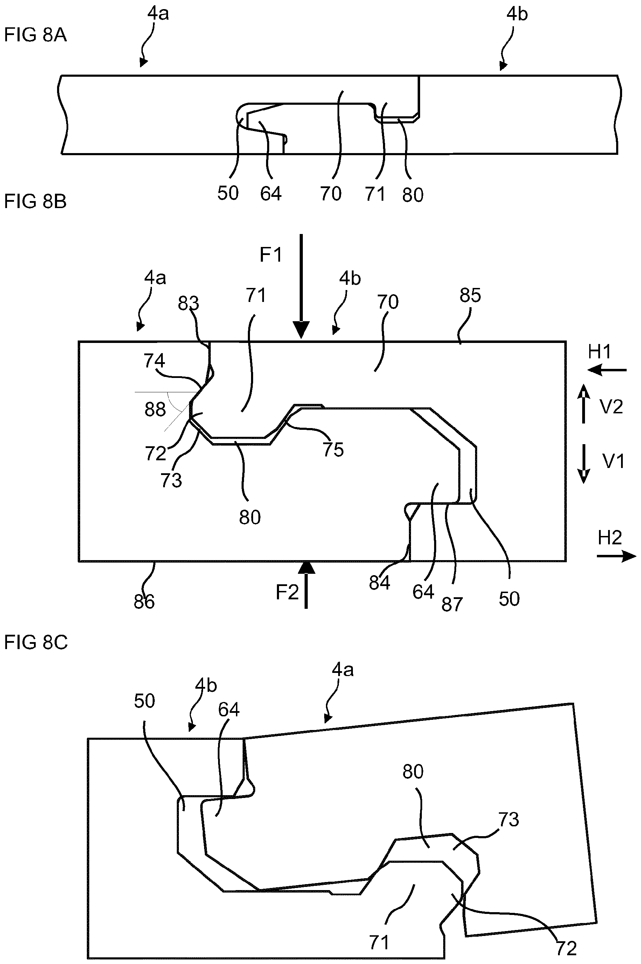

FIG 2B shows a cross section CS 2B of the first panel 1, the third panel 4 and the fifth panel 6. The figure shows that an edge section of the fourth edge of the third panel may be arranged in edge section groove at the second edge of the fifth panel 6. The third panel 4 may comprise two or more boards 4a-4d locked by a mechanical locking system. Examples of the mechanical locking system are shown in FIGS 8A-C. A second edge of the fifth panel may be provided with another of the locking devices (not shown) for connecting adjacent edges of adjacent boards.

FIG 2C shows a cross section CS 2C of the second and third panel 2, 4. The third panel is in this example provided with a dismantling groove 33 adapted for insertion of a dismantling tool, which pushes the flexible tongue into the insertion groove, which facilitates dismantling of the second and third panel.

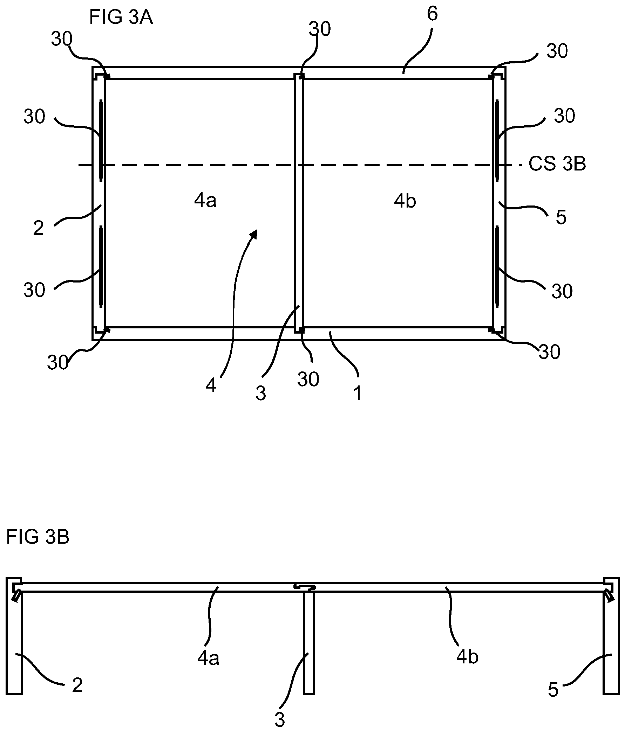

FIG 3A shows a furniture, such as a bookshelves, comprising eight of the locking devices, arranged with a side of the frame facing downwards. The furniture comprises a first panel 1, e.g. a side of the bookshelves, connected at a first edge to a first edge of a second panel 2, e.g. the top of the bookshelves, by one of the locking devices. A first edge of a third panel 4, e.g. a rectangular back piece of the bookshelves, is connected to a second edge of the second panel by another of the locking devices. An edge section of a second edge of the third panel 4 may be inserted into an edge section groove of a second edge of the first panel. A first edge of a fourth panel 5, e.g. a bottom of the bookshelves, is connected to a third edge of the first panel by another of said locking devices. A third edge of the third panel 4 is connected to a second edge of the fourth panel 5 by another of said locking devices. A first edge of a fifth panel 6, e.g. a side of the bookshelves, is connected to a third edge of the fourth panel 5, by another of said locking devices, and a third edge of the fifth panel is connected to a third edge of the second panel, by another of said locking devices. An edge section of a fourth edge of the third panel 4 may be arranged in an edge section groove at a second edge of the fifth panel 5. The locking device at the first and the third edge respectively of the third panel may each comprise two or more flexible tongues 30. A sixth panel 3, e.g. a shelf of the bookshelves, which is arranged parallel to the first and the fourth panel, is connected, by another of the locking devices, at a first edge to the first to the first panel, and a third edge is connected, by another of the locking devices, to the fifth panel. The flexible tongue of the locking device at the first and third edge, respectively, of the sixth panel is preferably arranged at the edge section 22. The third panel is preferably connected slideable at the first and the third edge in order to facilitate disassembling.

FIG 3B shows a cross section CS 3B of the first panel 1, the third panel 4 and the fifth panel 6. The third panel 4 may comprise two or more boards 4a-b locked by the mechanical locking system described above.

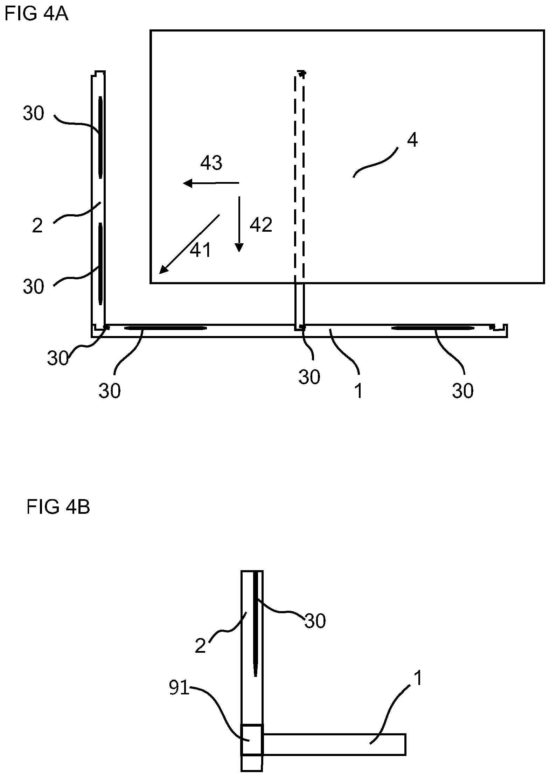

FIG 4A shows an example of a method for assembling the assembled product described under FIG 2A-C. The first, second and sixth panel 1, 2, 3 are preferably connected to each other before the third panel is connected. The third panel may be displaced in a diagonal direction 41 such that the first and the second edge of the third panel is connected at the same time to the second edge of the first panel and to the second edge of the second panel. A preferred alternative for assembling the panels comprises:
- arranging a first panel 1, with a first main plane, perpendicular to a second panel 2 with a second main plane, wherein the first main plane is perpendicular to the second main plane;
- connecting by hand a first edge of the first panel 1 to a first edge of the second panel, by linearly displacing the first panel and/or the second panel;
- arranging a third panel 4, with a third main plane, perpendicular to the second and the third panel, wherein the third main plane is perpendicular to the first and the second main plane;
- connecting by hand a second edge of the third panel 4 to a second edge of the second panel, by linearly displacing 43 the third panel 4 and/or second panel;
- connecting by hand a first edge of the third panel 4 to a second edge of the first panel 1, by linearly displacing 42 the third panel and/or the first panel 1;
- arranging a fourth panel 5, with a fourth main plane, perpendicular to the first and the third panel, wherein the fourth main plane is parallel to the second main plane, and connecting by hand a first edge of a fourth panel 5 to a third edge of the first panel 1, by linearly displacing the fourth panel 5 and/or the first panel 1; and
- arranging a fifth panel 6, with a fifth main plane, perpendicular to the third and the fourth panel, wherein the fifth main plane is parallel to the first main plane, and connecting by hand a first edge of the fifth panel to a third edge of the second panel, and a third edge of a fifth panel to a third edge of the fourth panel, by linearly displacing the fifth panel 6 and/or the second and the fourth panel.

Each linear displacement is preferably executed in a direction parallel to the third main plane.

The first edge of the third panel 4 is in this alternative connected displaceable at the first edge. Another alternative is to displace the third panel in the second direction 43 perpendicular to the second panel and subsequently displace the third panel in the first direction 43 perpendicular to the first panel. The second edge of the third panel 4 is in this embodiment connected displaceable at the second edge.

FIG 4B shows that a corner section between e.g. the first and the second panel may be provided with a cover plate, in order to hide the locking device.

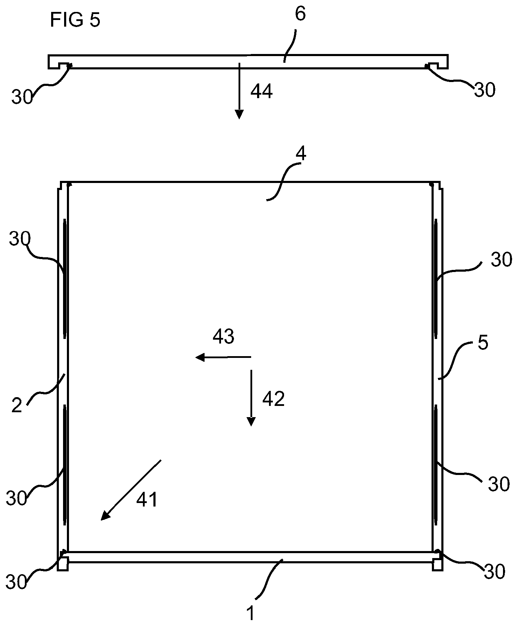

FIG 5 shows a furniture, such as a drawer, comprising six of the locking devices, arranged with a side of the frame facing downwards. The furniture comprises a first panel 1, e.g. an inner side of the drawer, connected at a first edge to a first edge of a second panel 2, e.g. a side of the drawer, by one of the locking devices. A first edge of a third panel 4, e.g. a rectangular bottom of the drawer, is connected to a second edge of the second panel by another of the locking devices. An edge section of a second edge of the third panel 4 may be inserted into an edge section groove of a second edge of the first panel. A first edge of a fourth panel 5, e.g. a side of the drawer, is connected to a third edge of the first panel by another of said locking devices. A third edge of the third panel 4 is connected to a second edge of the fourth panel 5 by another of said locking devices. A first edge of a fifth panel 6, e.g. a front panel of the drawer, is subsequently connected to a third edge of the fourth panel 5, by another of said locking devices, and a third edge of the fifth panel is connected to a third edge of the second panel, by another of said locking devices. An edge section of a fourth edge of the third panel 4 may be arranged in an edge section groove at a second edge of the fifth panel 5. The locking device at the first and the third edge respectively of the third panel may each comprise two or more flexible tongues 30. The third panel is preferably connected slideable at the first and the third edge in order to facilitate disassembling. A preferred alternative for assembling the panels comprises:
- arranging a first panel 1, with a first main plane, perpendicular to a second panel 2 with a second main plane, wherein the first main plane is perpendicular to the second main plane;
- connecting by hand a first edge of the first panel 1 to a first edge of the second panel, by linearly displacing the first panel and/or the second panel;
- arranging a third panel 4, with a third main plane, perpendicular to the second and the third panel, wherein the third main plane is perpendicular to the first and the second main plane;
- connecting by hand a second edge of the third panel 4 to a second edge of the second panel, by linearly displacing 43 the third panel 4 and/or second panel;
- arranging a fourth panel 5, with a fourth main plane, perpendicular to the first and the third panel, wherein the fourth main plane is parallel to the second main plane, and simultaneous connecting by hand, by linearly displacing the fourth panel 5, a first edge of a fourth panel 5 to a third edge of the first panel 1 and a third edge of the third panel 3 to a second edge of the fourth panel 5; and
- arranging a fifth panel 6, with a fifth main plane, perpendicular to the third and the fourth panel, wherein the fifth main plane is parallel to the first main plane, and connecting by hand a first edge of the fifth panel to a third edge of the second panel, and a third edge of a fifth panel to a third edge of the fourth panel, by linearly displacing 44 the fifth panel 6.

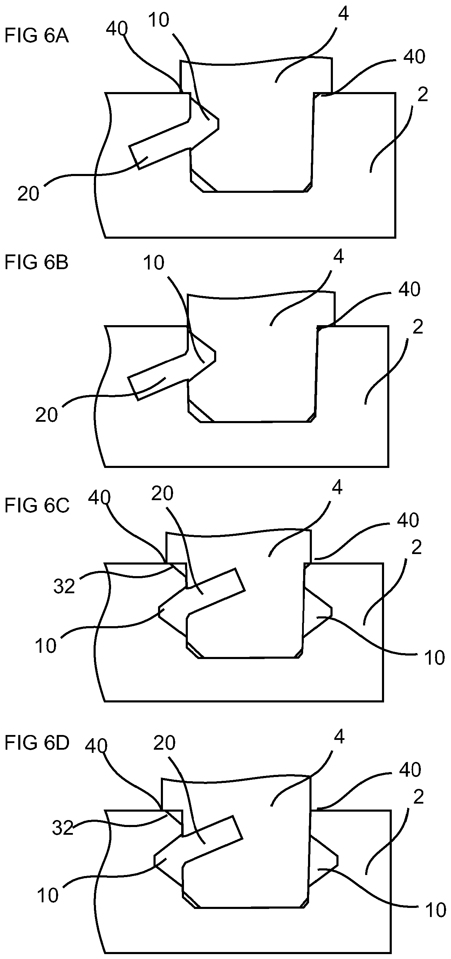

FIGS 6A-B show alternative examples of the locking device. Examples are shown with a calibrating groove 40 at one or two sides of the edge section. The tongue groove 10 may be symmetric such that the same dismantling tool can be used at opposite positions of the locking device, i.e. mirror inverted locking devices. The edge section groove may be provided with a guiding surface 32 that facilitates insertion of the edge section into the edge section groove. The edge section groove may be provided with two opposite tongue grooves 10. Two opposite tongue grooves may be easily made by an end cutter, by e.g. a craftsman on site.

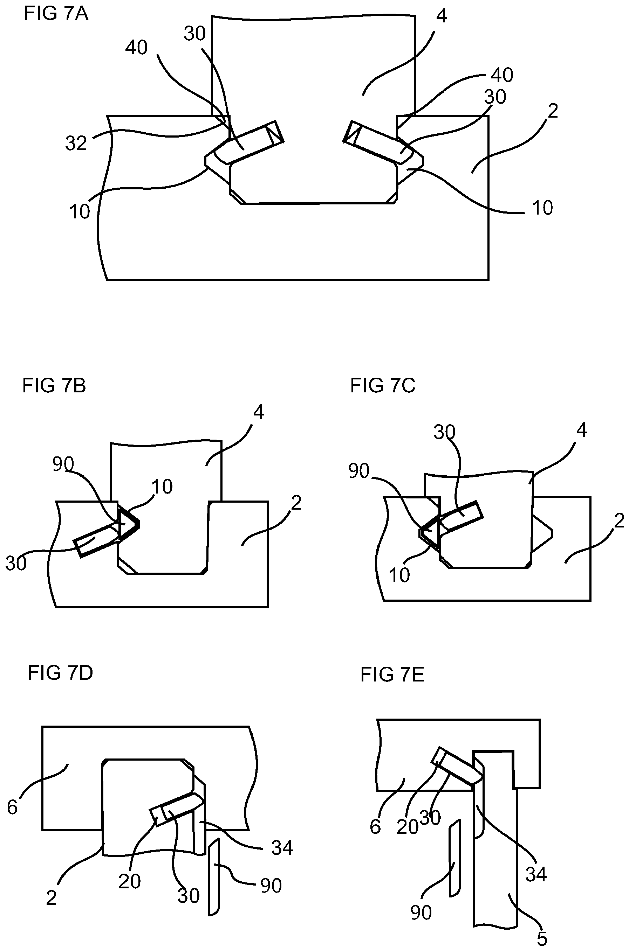

FIG 7A shows that the example with two opposite tongue grooves 10 may be provided with two flexible tongues 30.

FIG 7B-C show disassembling of the locking device by inserting a symmetric dismantling tool 90 into a symmetric tongue groove 10.

FIG 7D-E show alternative examples not presently claimed provided with a dismantling recess 34. These examples may be an alternative to the example shown in FIG 2C, if for example it is desired to un-lock the locking device from the inside of a furniture, such as a drawer, a box or a book. These examples may also be used to connect the fifth panel to the second and fourth panel in the embodiment shown in FIG 5. The tongue 30 is arranged in the edges section groove in FIG 7B and at the edge section in FIG 7E. The edge section is provided with a dismantling groove 34 which adapted to a dismantling tool 90. The tongue 30 is pushed back into the displacement groove 20, and un-lock the locking device, when the dismantling tool is inserted into the dismantling recess. The dismantling recess may be covered by a covering plate (not shown). The examples with the dismantling groove or recess are particular advantageous for example which do not have tongue groove which is accessible from an outer end of the tongue groove for insertion of a dismantling tool. However, the examples with the dismantling groove or recess may be used to connect any adjacent panels in order to facilitate disassembling.

FIG 8A shows an example of the mechanical locking system comprising a tongue 64 at a first edge of a first board that cooperates with a tongue groove 50 at a second edge of a second board for locking the first and the second board in a first direction. Furthermore, the locking system comprises a protruding strip 70 with a locking panel 71 at the second edge. The locking panel 71 cooperates with a locking groove 80 at the first edge for locking the first and the second board in a second direction, which is perpendicular to the first direction. The boards and the locking system are preferably arranged in the assembled product, with the locking strip facing the direction that is to be loaded. The locking system may remain locked if arranged in this way.

FIG 8B shows another example of a panel, such as a back or bottom panel, comprising a first 8a and a second board 8b provided with a mechanical locking system configured to lock the first 4a and the second board 4b together.

The first main plane of the first board is essentially parallel to a second main plane of the second board, wherein the panel comprises a first face 85 and an opposite second face 86 which are parallel to a main plane of the panel. The mechanical locking system comprising:
a first tongue 64 provided at a first edge of the first board 8a, wherein the first tongue is configured to cooperate with a first tongue groove 50 provided at a second edge of the second board 8b for locking together the first and the second panel in a first vertical direction V1;
a second tongue 72 at the second edge of the second board 8b, wherein the second tongue is configured to cooperate with a second tongue groove 73 at the first edge of the first panel 8a for locking together the first and the second panel in a second vertical direction V2;
a first pair of locking surfaces 83 provided at the first face for locking together the first board 8a and the second board 8b in a first horizontal direction H1; and
second pair of locking surfaces 84 provided at the second face for locking together the first board 8a and the second board 8b in a second horizontal direction H2.

The first pair of locking surfaces 83 are preferably essentially vertical. The second pair of locking surfaces 84 are also preferably essentially vertical.

The first tongue 64 and the first tongue groove 50 cooperate at a third pair of locking surfaces 87 that are preferably arranged essentially horizontally.

The second tongue 72 and the second tongue groove 73 cooperate at a fourth pair of locking surfaces 74 that are preferably arranged at an angle 88 to the main plane of the panel that is greater than zero. The angle 88 is elected to allow the first board to be locked to the second board by an angling motion of the first panel, wherein the first tongue 64 is inserted in the first tongue groove 50, as is shown in FIG 8C.

The first face 85 is arranged upwards, or in the direction were the greatest load F1 is likely to be applied, to prevent that the first and the second board are unlocked by a reversed angling motion.

The second face 86 is arranged downwards, or in the direction were the smallest load F2 is likely to be applied on the panel. The second tongue and the tongue groove may provide a resistance for unlocking of the first and the second board by a reversed angling motion.

The angle 88 may be in the range of about 30° to about 60°. The angle is preferably about 45°.

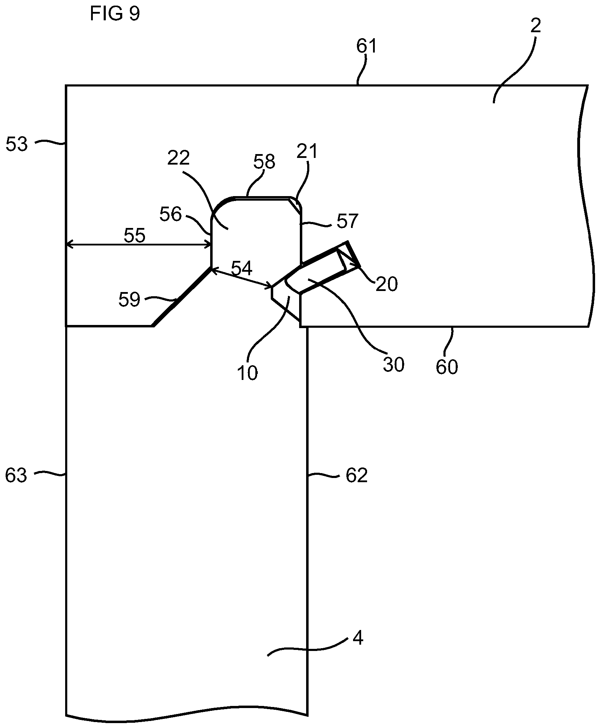

FIG 9 shows an example of the locking device not presently claimed for locking together a panel and an adjacent panel of the frame panels 1, 2, 4, 5. The locking device comprises a first thickness 55 of a core material, between an edge section groove 21 and a first edge. The first thickness is greater than a minimum second thickness 54 of a core material of an edge section 22. The ratio between the first thickness 55 and the minimum second thickness 54 may be at least about 1,25; preferably at least about 1,5; and more preferably at least about 2. A preferred ratio between the first thickness 55 and the minimum second thickness 54 is in the range of about 1,1 to about 3.

An example comprises an edge section groove 21 that comprises a first wall 56 and a second wall 57, wherein the first wall is closer to an edge of the panel than the second wall. The first thickness 55 is preferably measured between the first wall 56 and the first edge 53. The first and the second walls 56, 57 are preferably connected by a bottom wall 58.

The edge section 22 may comprise a first wall and an opposite second wall, wherein the tongue groove 10 is provided in the first wall. The minimum second thickness 54 may be measured between a bottom of the tongue groove and the second wall.

An example of the insertion groove 20 that extends along essentially the entire length of the edge section groove of first edge may lead to an easier production. An example of the tongue groove 10 that extends along essentially the entire length of the edge section of the second edge may also lead to an easier production.

The edge 53 of the panel 2 is in a preferred embodiment provided essentially in the same plane as an outer face 63 of the adjacent second panel 4.

An edge of the opening of the edge section groove may be provided with a bevel 59 or rounding in order to facilitate the insertion of a flexible tongue 30 into the insertion groove 20.

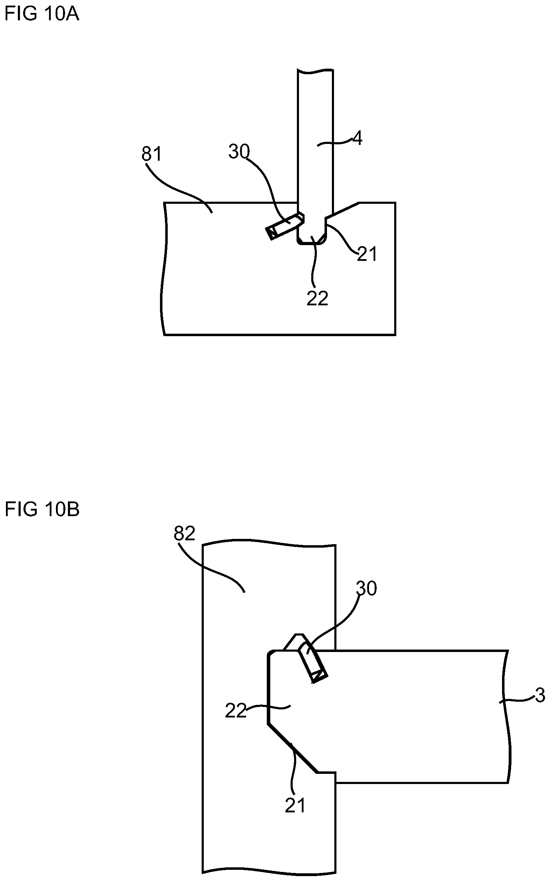

FIG 10A shows an example of a locking device for locking the third panel 4, such as a back piece or a bottom panel, to any back or bottom edge 81 of the frame. An embodiment of the frame is shown in FIG 2A, 3A and 5.

FIG 10B shows an example of a locking device for locking the sixth panel 3, such as a shelf, to any panel 82 of the frame. A first edge of the sixth panel may be connected to the frame by linear displacement and/or an angling motion. An example of the frame is shown in FIG 2A and FIG 3A.

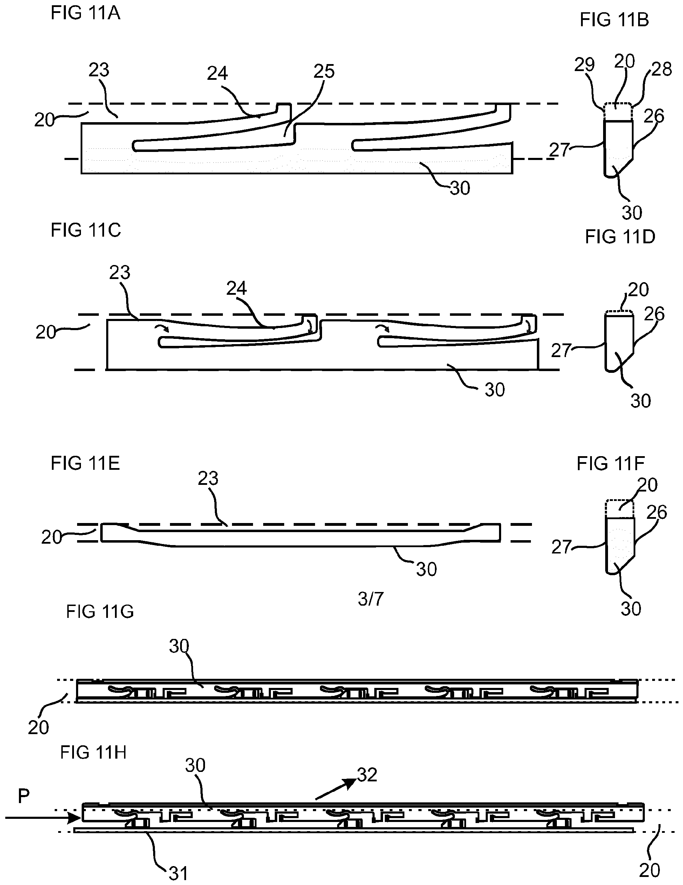

An example of the flexible tongue 30, which is displaceable in an insertion groove 20, is shown in FIGS 11A-11D. FIGS 11A-B show the flexible tongue in a locked potion and FIGS 11C-D show the flexible tongue during assembling of a panel and an adjacent panel. FIG 11B shows a cross section of the flexible tongue in FIG 11A. FIG 11D shows a cross section of the flexile tongue in FIG 11C. The flexible tongue comprises bendable protruding parts 24. A space 23 is provided between the tongue and a bottom wall of the insertion groove 20. FIG 11C shows that the flexible tongue is pushed into the insertion groove 20 and towards the bottom wall during the assembling of the panel. The tongue springs back when the first and the second panel have reached a locked position. A recess 25 is preferably arranged at each bendable protruding part.

The flexible tongue may have a first displacement surface 26 and a opposite second displacement surface 27, configured to be displaced along a third and a fourth displacement surface 28, 29, respectively, of the insertion groove 20.

An alternative example of the flexible tongue 30, without the protruding bendable parts, is shown in FIG 11E-F. FIG 11F shows a cross section of the tongue in FIG 11E. The alternative embodiment is bendable in its length direction in order to accomplish the same function as the embodiment shown in FIG 11A-D.

A further example of the flexible tongue 30 is shown in FIG 11G-H. FIG 11G shows the flexible tongue 30 before the panel and the adjacent panel are locked together by the flexible tongue. The flexible tongue comprises an inner part 31 provided with wedge elements and an outer part for the locking together the panel and the adjacent panel by the flexible tongue. The locking is obtained by applying a force P, in a direction parallel to the first edge, at a short edge of the outer part. The force displaces the outer tongue part in the direction parallel to the edge of the panel and the wedges force the outer tongue part in a perpendicular direction, out of the insertion groove 20. The resulting displacement 32 of the outer part of the flexible tongue is therefore in a direction between the direction parallel to the first edge and the perpendicular direction.

## Claims

1. A set of panels for an assembled furniture product, wherein the set of panels is provided with one or more locking devices, each locking device comprises:
an edge section (22) of a panel (4) which is configured to be arranged in an edge section groove (21) of an adjacent panel (2) for locking the panel and the adjacent panel together in a first direction,
a flexible tongue (30) arranged in an insertion groove (20) in the edge section groove (21) at an edge of the adjacent panel (2),
said flexible tongue (30) cooperates with a tongue groove (10) at the edge section (22) at an adjacent edge of the panel (4), for locking the panel (4) and the adjacent panel (2) together in a second direction, which is essentially perpendicular to the first direction,
wherein the flexible tongue (30) is, during assembling of the panel (4) and the adjacent panel (2), configured to be pushed into the insertion groove (20) when the edge section (22) is inserted into the edge section groove (21),
wherein the panel (2) and the adjacent panel (4) are panels of the set of panels that are configured to be connected perpendicular to each other, i.e. with a main surface of the panel perpendicular to a main surface of the adjacent panel,
wherein the flexible tongue (30) is configured to spring back and into the tongue groove (10) when the panel and the adjacent panel have reached a connected state,
wherein the locking device is configured such that the edge and the adjacent edge may be connected by hand, and
wherein the set of panels comprises at least four frame panels (1, 2, 5, 6) that are configured to be connected together at adjacent edges by at least one of said locking devices to obtain a frame of a rectangular shape, **characterised in that** the set of panels comprises a fifth panel (4), such as a back or bottom panel, which is configured to be connected to a back or bottom edge of the frame by at least one of said locking devices.

2. The set of panels as claimed in claim 1, wherein the fifth panel (4) is configured be connected to a back or a bottom edge of two of the frame panels (1, 2, 5, 6), by at least one of said locking devices at each of said back or bottom edge.

3. The set of panels as claimed in claim 1 or 2, wherein the edge section is provided with a calibrating groove (40).

4. The set of panels as claimed in any one of the preceding claims, wherein the panels are plastic panels or wood fibre based boards, e.g. HDF boards, particleboard or solid wood board.

5. The set of panels as claimed in any one of the preceding claims, wherein at least one panel is provided with a decorative layer.

6. The set of panels as claimed in any one of the preceding claims, wherein the assembled furniture product is a drawer, a cupboard, bookshelves, a wardrobe, a kitchen fixture, or a box for storing or transporting.

7. The set of panels as claimed in any one of the preceding claims, wherein the insertion groove, of at least one of said locking devices, extends along essentially the entire length of the edge of the panel.

8. The set of panels as claimed in any one of the preceding claims, wherein the tongue groove, of at least one of said locking devices, extends along essentially the entire length of the adjacent edge of the adjacent panel.

## Patentansprüche

1. Plattensatz für ein zusammengesetztes Möbelerzeugnis, wobei der Plattensatz mit einer oder mehreren Verriegelungsvorrichtungen versehen ist, wobei jede Verriegelungsvorrichtung umfasst:
einen Kantenabschnitt (22) einer Platte (4), der konfiguriert ist, um in einer Kantenabschnittsnut (21) einer angrenzenden Platte (2) angeordnet zu sein, um die Platte und die angrenzende Platte in einer ersten Richtung zusammen zu verriegeln,
eine flexible Feder (30), die in einer Einsetznut (20) in der Kantenabschnittsnut (21) an einer Kante der angrenzenden Platte (2) angeordnet ist,
wobei die flexible Feder (30) mit einer Feder-Nut (10) an dem Kantenabschnitt (22) an einer angrenzenden Kante der Platte (4) zusammenwirkt, um die Platte (4) und die angrenzende Platte (2) zusammen in einer zweiten Richtung, die im Wesentlichen senkrecht zur ersten Richtung ist, zu verriegeln,
wobei die flexible Feder (30) während des Zusammenbaus der Platte (4) und der angrenzenden Platte (2) konfiguriert ist, um in die Einsetznut (20) gedrückt zu werden, wenn der Kantenabschnitt (22) in die Kantenabschnittsnut (21) eingeführt wird,
wobei die Platte (2) und die angrenzende Platte (4) Platten des Satzes von Platten sind, die konfiguriert sind, um senkrecht zueinander miteinander verbunden zu werden, d. h. mit einer Hauptoberfläche der Platte senkrecht zu einer Hauptoberfläche der angrenzenden Platte,
wobei die flexible Feder (30) konfiguriert ist, um zurück und in die Feder-Nut (10) zu federn, wenn die Platte und die angrenzende Platte einen verbundenen Zustand erreicht haben,
wobei die Verriegelungsvorrichtung derart konfiguriert ist, dass die Kante und die angrenzende Kante von Hand verbunden werden können, und
wobei der Plattensatz mindestens vier Rahmenplatten (1, 2, 5, 6) umfasst, die konfiguriert sind, um an angrenzenden Kanten durch mindestens eine der Verriegelungsvorrichtungen miteinander verbunden zu werden, um einen Rahmen in einer rechteckigen Form zu erhalten, **dadurch gekennzeichnet, dass** der Plattensatz eine fünfte Platte (4), wie beispielsweise eine Rückseiten- oder Bodenplatte, umfasst, die konfiguriert ist, um mit einer Rückseiten- oder Bodenkante des Rahmens durch mindestens eine der Verriegelungsvorrichtungen verbunden zu werden.

2. Plattensatz nach Anspruch 1, wobei die fünfte Platte (4) konfiguriert ist, um mit einer Rückseiten- oder Bodenkante von zwei der Rahmenplatten (1, 2, 5, 6) durch mindestens eine der Verriegelungsvorrichtungen an jeder der Rückseiten- oder Bodenkante verbunden zu werden.

3. Plattensatz nach Anspruch 1 oder 2, wobei der Kantenabschnitt mit einer Kalibrierungsnut (40) versehen ist.

4. Plattensatz nach einem der vorstehenden Ansprüche, wobei die Platten Kunststoffplatten oder holzfaserbasierte Platten sind, z. B. HDF-Platten, Spanplatte oder Massivholzplatte.

5. Plattensatz nach einem der vorstehenden Ansprüche, wobei mindestens eine Platte mit einer dekorativen Schicht versehen ist.

6. Plattensatz nach einem der vorstehenden Ansprüche, wobei das zusammengesetzte Möbelerzeugnis eine Schublade, ein Schrank, Bücherregale, eine Kleideraufbewahrung, eine Küchenvorrichtung oder ein Kasten zum Aufbewahren oder Transportieren ist.

7. Plattensatz nach einem der vorstehenden Ansprüche, wobei sich die Einsatznut von mindestens einer der Verriegelungsvorrichtungen im Wesentlichen entlang der gesamten Länge der Plattenkante erstreckt.

8. Plattensatz nach einem der vorstehenden Ansprüche, wobei sich die Feder-Nut von mindestens einer der Verriegelungsvorrichtungen im Wesentlichen entlang der gesamten Länge der angrenzenden Kante der angrenzenden Platte erstreckt.

## Revendications

1. Ensemble de panneaux pour un produit d'ameublement assemblé, dans lequel l'ensemble de panneaux est pourvu d'un ou plusieurs dispositifs de verrouillage, chaque dispositif de verrouillage comprend :
une section de bord (22) d'un panneau (4) qui est configurée pour être agencée dans une rainure de section de bord (21) d'un panneau adjacent (2) pour verrouiller le panneau et le panneau adjacent ensemble dans une première
direction,
une languette flexible (30) agencée dans une rainure d'insertion (20) dans la rainure de section de bord (21) au niveau d'un bord du panneau adjacent (2),
ladite languette flexible (30) coopère avec une rainure de languette (10) au niveau de la section de bord (22) au niveau d'un bord adjacent du panneau (4), pour verrouiller le panneau (4) et le panneau adjacent (2) ensemble dans une deuxième direction, qui est sensiblement perpendiculaire à la première direction,
dans lequel la languette flexible (30) est, pendant l'assemblage du panneau (4) et du panneau adjacent (2), configurée pour être poussée dans la rainure d'insertion (20) lorsque la section de bord (22) est insérée dans la rainure de section de bord (21),
dans lequel le panneau (2) et le panneau adjacent (4) sont des panneaux de l'ensemble de panneaux qui sont configurés pour être connectés perpendiculaires l'un à l'autre, c'est-à-dire avec une surface principale du panneau perpendiculaire à une surface principale du panneau adjacent,
dans lequel la languette flexible (30) est configurée pour revenir et entrer élastiquement dans la rainure de languette (10) lorsque le panneau et le panneau adjacent ont atteint un état connecté,
dans lequel le dispositif de verrouillage est configuré de telle sorte que le bord et le bord adjacent peuvent être connectés à la main, et
dans lequel l'ensemble de panneaux comprend au moins quatre panneaux de cadre (1,2, 5, 6) qui sont configurés pour être connectés ensemble au niveau de bords adjacents par au moins un desdits dispositifs de verrouillage pour obtenir un cadre d'une forme rectangulaire, **caractérisé en ce que** l'ensemble de panneaux comprend un cinquième panneau (4), tel qu'un panneau arrière ou inférieur, qui est configuré pour être connecté à un bord arrière ou inférieur du cadre par au moins un desdits dispositifs de verrouillage.

2. Ensemble de panneaux tel que revendiqué dans la revendication 1, dans lequel le cinquième panneau (4) est configuré pour être connecté à un bord arrière ou inférieur de deux des panneaux de cadre (1, 2, 5, 6), par au moins un desdits dispositifs de verrouillage au niveau de chacun dudit bord arrière ou inférieur.

3. Ensemble de panneaux tel que revendiqué dans la revendication 1 ou 2, dans lequel la section de bord est pourvue d'une rainure d'étalonnage (40).

4. Ensemble de panneaux tel que revendiqué dans l'une quelconque des revendications précédentes, dans lequel les panneaux sont des panneaux en plastique ou des panneaux à base de fibres de bois, par exemple des panneaux HDF, un panneau de particules ou un panneau en bois massif.

5. Ensemble de panneaux tel que revendiqué dans l'une quelconque des revendications précédentes, dans lequel au moins un panneau est pourvu d'une couche décorative.

6. Ensemble de panneaux tel que revendiqué dans l'une quelconque des revendications précédentes, dans lequel le produit d'ameublement assemblé est un tiroir, un placard, des étagères, une garde-robe, un accessoire de cuisine, ou une boîte pour le stockage ou le transport.

7. Ensemble de panneaux tel que revendiqué dans l'une quelconque des revendications précédentes, dans lequel la rainure d'insertion, d'au moins un desdits dispositifs de verrouillage, s'étend sensiblement le long de la longueur entière du bord du panneau.

8. Ensemble de panneaux tel que revendiqué dans l'une quelconque des revendications précédentes, dans lequel la rainure de languette, d'au moins un desdits dispositifs de verrouillage, s'étend sensiblement le long de la longueur entière du bord adjacent du panneau adjacent.
